Europäisches Patentamt

European Patent Office

Office européen des brevets

(19)

(11) Veröffentlichungsnummer: **0 295 213**
**A1**

(12) # EUROPÄISCHE PATENTANMELDUNG

(21) Anmeldenummer: **88810370.2**

(22) Anmeldetag: **07.06.88**

(51) Int. Cl.⁴: **B 01 D 46/04**

(30) Priorität: **11.06.87 CH 2199/87**

(43) Veröffentlichungstag der Anmeldung:
**14.12.88 Patentblatt 88/50**

(84) Benannte Vertragsstaaten:
**AT BE CH DE ES FR GB IT LI NL SE**

(71) Anmelder: **Aeromatic AG**
**Hauptstrasse 145**
**CH-4416 Bubendorf (CH)**

(72) Erfinder: **Külling, Walter**
**Wildensteinerstrasse 26**
**CH-4416 Bubendorf (CH)**

(74) Vertreter: **Eschmann, Heinz et al**
**A. Braun, Braun, Héritier, Eschmann AG Patentanwälte**
**Holbeinstrasse 36-38**
**CH-4051 Basel (CH)**

(54) **Wirbelschichtanlage mit Abluftfilter.**

(57) Im Oberteil (1) des Gehäuses einer nach dem Wirbelschichtverfahren arbeitenden Anlage ist ein Abluftfilter (2) angeordnet. Die an Rüttelvorrichtungen (7a-7g) aufgehängten, nach unten offenen Filtergarnituren (3a-3g) münden in entsprechend angeordnete Oeffnungen eines Filterbodens (4), der mittels einer aufblasbaren Dichtung (6) im Gehäuse dichtend befestigt ist.

Je nachdem, ob der in der Reinigungsphase aus der periodisch gerüttelten Filtergarnitur (3d) nach unten fallende Staub gesamthaft ausgeschieden beziehungsweise ganz oder teilweise dem Prozess wieder zugeführt werden muss, kann der Filterboden (4) mit unterschiedlichen Auffanggefässen ausgebildet sein: Die gezeigten Auffangtöpfe (8a-8g) sind in der anderen Ausführungsform durch unten offene Auffangtrichter mit koaxial angeordneten Blasdüsen ersetzt.

Die bisher bei Staubausscheidung aus dem Prozess erforderliche Anordnung einer vom Gehäuse (1) getrennten Filteranlage entfällt. Durch blosses Auswechseln des Filterbodens (4) kann nun der Uebergang von einem Behandlungsprozess zum anderen kurzfristig bewerkstelligt werden.

Fig. 1

# Beschreibung

## Wirbelschichtanlage mit Abluftfilter

Die Erfindung betrifft eine Einrichtung zur Behandlung wirbelfähiger Substanzen im Wirbelschichtverfahren gemäss dem Oberbegriff des unabhängigen Patentanspruches 1.

Derartige nach dem Wirbelschichtverfahren arbeitende Anlagen werden seit etwa 40 Jahren zum Granulieren, Agglomerieren, Trocknen, Mischen, Coaten und anderen Behandlungsvorgängen eingesetzt. In zahlreichen Gebieten unserer Industrie, so z.B. in der Lebensmittelherstellung (Instantprodukte) und der Pharmacie (Tabletten) sind sie ein unentbehrliches Hilfsmittel, dessen Vorteile, wie die einfache Handhabung der beteiligten Feststoffe, die gleichmässige Temperaturverteilung, die grossen Austauschflächen und die hohen Wärmeübergangszahlen ihnen immer neue Anwendungsgebiete erschlossen haben.

Typisch für diese Behandlungsart ist es bekanntlich, dass der zu behandelnde Feststoff durch einen von unten nach oben gerichteten Warmluftstrom in der Schwebe, im "Wirbelbett", gehalten und dabei solange durch Zufuhr von Wärme, Flüssigkeit und Wirkstoffen bearbeitet wird, bis der erwünschte physikalische Zustand erreicht ist.

Die zur Aufrechterhaltung des Wirbelbetts erforderliche Prozessluft strömt durch den oberen Teil der Einrichtung ab, wird aber, bevor sie ins Freie entweicht, im Durchgang durch ein Abluftfilter vom mitgeführten Staub befreit. Die sorgfältige Ausfilterung des Staubes aus der Abluft ist zum Schutze der Umwelt von grosser Bedeutung, zumal in einer verhältnismässig grossen Anzahl der im Wirbelschichtverfahren realisierten Prozesse unter anderem toxische oder schädliche Substanzen verwendet werden können und die Produkte zum Teil extrem teuer sind.

Unter den bekannten Abluftfiltersystemen, die bisher in Wirbelschichtanlagen Verwendung fanden, lassen sich vier grundsätzliche Typen unterscheiden.

Die älteste Bauart verwendete eine im Strömungsweg der staubbeladenen Abluft hängende Staubfanggarnitur, welche im allgemeinen mehrere zusammenhängende Staubsäcke aufwies, an deren Innenfläche der Staub zurückgehalten wurde und von Zeit zu Zeit durch eine Rüttelvorrichtung abgeschüttelt werden musste. Während dieser Reinigungsphase musste der Betrieb der Wirbelschichtanlage unterbrochen werden.

Um den kostspieligen und für viele Produkte überhaupt unzulässigen, mindestens aber störenden Betriebsunterbruch zu vermeiden, wurde vorgeschlagen, den oberhalb des Wirbelbetts befindlichen Raum in zwei Kammern zu unterteilen, deren Staubfanggarnituren nun getrennt gerüttelt werden konnten. Beim Reinigungsvorgang wurde der Luftdurchgang durch die zu reinigende Kammer abgestellt, so dass die gesamte Betriebsluftmenge die zweite Kammer durchströmen musste. Durch den damit verbundenen Anstieg des Luftwiederstandes verringerte sich auch die pro Zeiteinheit durchströmende Luftmenge, was sich störend auf den Wirbelschichtprozess auswirkte und im Extremfall zum Zusammenbruch des Wirbelbettes führen konnte. Ausserdem wurde der von der einen Kammer abgeschüttelte Staub zum Teil durch den vorbeistreichenden Luftstrom in die andere, in Betrieb befindliche Kammer mitgerissen.

Gemäss einem weiteren System, das im Prospektblatt FB 1.4.1 der Aeromatic AG beschrieben ist, wird der oberhalb des Wirbelbettes befindliche Raum in vier Kammern unterteilt, welche jeweils eine Unstellklappe für die nach aussen strömende Abluft und eine weitere für den Eintritt von Spülluft aufzeigt, welche den betreffenden Filtersack von innen nach aussen durchströmt und den anhaftenden Staub in die Wirbelschichtzone zurückbefördert. Hier bleiben in der Reinigungsphase für die Abluft zwar noch 75 % des Gesamtquerschnitts verfügbar, doch kann sich auch diese verminderte Querschnittsverringerung ungünstig auf den Arbeitsprozess auswirken Ausserdem müssen die Filtergarnituren durch Stützkörbe verstärkt werden, was die Anlage erheblich verteuert.

Eine Weiterentwicklung dieses Systems, welche im Prospektblatt FB 1.4.2 der Aeromatic AG beschrieben ist, zeigt eine oberhalb des Abluftfilters angeordnete Druckkammer, in welcher mittels Druckluft ein ständiger Ueberdruck aufrechterhalten wird. In der Reinigungsphase wird jeweils ein zu der betreffenden Filtergarnitur führendes Verschlussorgan geöffnet, so dass die unter Druck stehende Spülluft die Filtergarnitur von innen nach aussen durchströmt. Auch in diesem Falle muss, je nach Anzahl der vorgesehenen Filtergarnituren, eine Querschnittsverringerung der während der Reinigungsphase verfügbaren Abluft-Abströmwege in Kauf genommen werden, während ferner auch hier kostspielige Stützkörbe für die Filtersäcke angebracht werden müssen.

Abgesehen von diesen, jedem einzelnen der bekannten System anhaftenden Nachteilen muss jedoch noch ein weiterer Nachteil erwähnt werden, der allen bekannten Systemen gemeinsam ist: Keine dieser Anlagen gestattet es nämlich, den in der Reinigungsphase anfallenden Staub aus dem Prozess partiell oder gesamthaft auszuscheiden und dem Prozess, je nach Bedarf, in dosierbarer Menge wieder zuzuführen. Die einzige, bisher realisierbare Möglichkeit der Staubrückführung bestand in der Anordnung separater, das heisst in einem getrennten Gehäuse untergebrachter Abluftfilter, was selbstverständlich eine erhebliche Verteuerung der Anlage mit sich brachte.

Im übrigen sind die bekannten Anlagen zu wenig flexibel, so dass eine Umstellung von einer Betriebsart auf die andere in vielen Fällen entweder mit grossen Umbauarbeiten verbunden oder praktisch unmöglich ist. Berücksichtigt man beispielsweise, dass im Coating-Verfahren der anfallende Staub keinesfalls in den Arbeitsprozess zurückgelangen darf und dass andererseits beim Sprühgranulieren die von der Rezeptur vorgeschriebene Wirksubstanz voll umfänglich der Wirbelbettzone wieder zugeführt werden muss, so ergibt sich hieraus zwangsläufig die Forderung nach einer raschen Umstellmöglichkeit, was mit den bestehenden Systemen aber nicht realisierbar ist.

Es ist somit die Aufgabe der vorliegenden Erfindung, eine nach dem Wirbelschichtverfahren arbeitende Anlage vorzuschlagen, welche einerseits eine absolut sichere Ausscheidung des in der Abluft mitgeführten Staubes bestattet; andererseits soll die neue Anlage der Forderung genügen, dass sowohl bei Ausscheidung des Staubes aus dem Prozess als auch beim Verbleiben des gesamten Abluftstaubes im Prozess die gleiche Anlage verwendbar ist, welche keinerlei separate Filterkonstruktionen erfordert und sich innerhalb kürzester Frist von einem Betriebszustand (Rückführung des Gesamtstaubes) in den anderen (Staubausscheidung) überführen lässt.

Die Lösung dieser Aufgabe ergibt sich aus dem kennzeichnenden Teil des unabhängigen Anspruchs 1, während bevorzugte Ausführungsformen in den abhängigen Ansprüchen definiert sind.

Nachstehend wird ein Ausführungsbeispiel der erfindungsgemässen Einrichtung anhand der beiliegenden Zeichnung erläutert.

Fig. 1 ist eine vereinfachte Schnittdarstellung durch den oberen, das Abluftfilter enthaltenden Abschnitt einer nach dem Wirbelschichtverfahren arbeitenden Einrichtung,

Fig. 2 ist ein Schnitt nach der Linie II-II in Fig. 1,

Fig. 3 ist eine Schnittdarstellung einer konstruktiven Variante,

Fig. 4 ist ein Schnitt nach der Linie IV-IV in Fig. 3,

Fig. 5 bis 8 sind vereinfachte Schnittdarstellungen konstruktiver Details,

Fig. 9 zeigt im Schnitt eine Variante,

Fig. 10 ist ein Schnitt längs der Ebene X-X in Fig. 9 und

Fig. 11 ist ein Schnitt längs der Ebene XI-XI in Fig. 9.

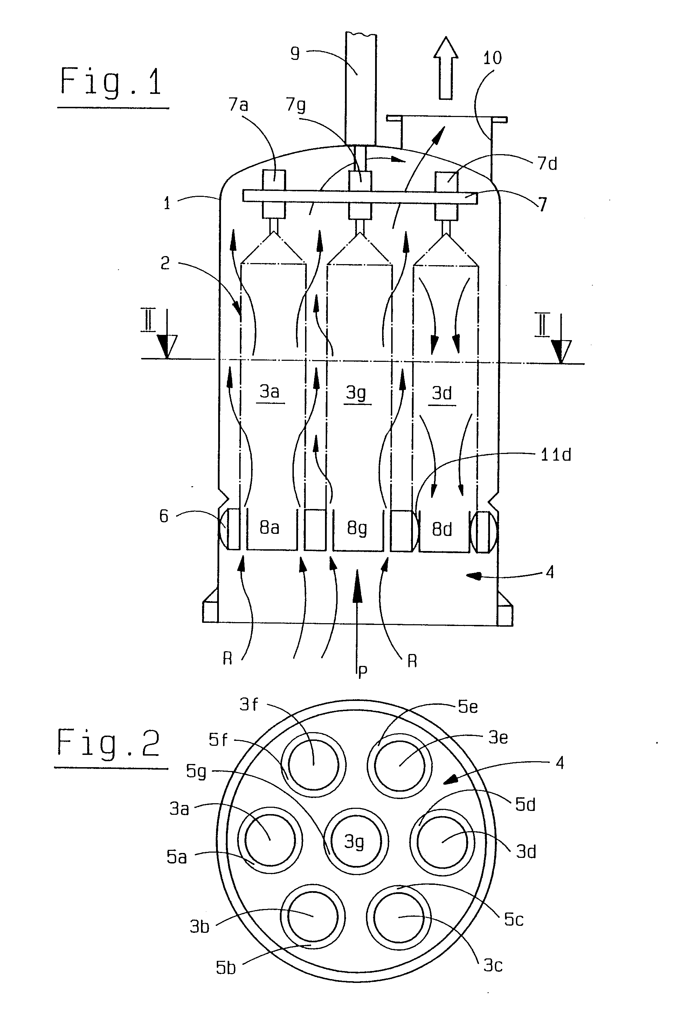

Fig. 1 zeigt in schematischer Form das Oberteil 1 eines Gehäuses, das in üblicher Weise in seinem unteren Abschnitt die warmluftbeschickte Wirbelzone enthält, während im dargestellten Oberteil ein mit 2 bezeichneter Abluftfilter untergebracht ist. Bezüglich des Aufbaus und der Funktion einer solchen Anlage wird auf die bestehende Literatur, beispielsweise die CH-PS 564 965, 566 173 und 604 881 verwiesen.

Der Abluftfilter 2 weist als dessen Hauptbestandteile sieben Filtergarnituren 3a bis 3g (Fig. 2) auf, welche in üblicher Weise als nach unten offene Säcke ausgebildet und an ihren unteren Enden in einem Filterboden 4 verankert sind. Letzterer ist eine kreisscheibenförmige Hohlplatte, welche entsprechend der Lage der Filtergarnituren mit sieben Durchgangsöffnungen 5a bis 5g versehen ist. An seinem Umfang trägt der Filterboden 4 eine an demselben oder am Gehäuse 1 befestigte Ringdichtung 6, welche aufblasbar ausgebildet ist und den Filterboden 4 einerseits an der Innenfläche des Gehäuseoberteils 1 hält, andererseits auch abdichtet. Durch blosse Druckentlastung der Ringdichtung 6 lässt sich somit der Filterboden 4 lösen und ausbauen.

Oberhalb des Filterbodens 4 sind die sieben Filtergarnituren 3a-3g einzeln an sieben Rüttelzylindern 7a-7g (wovon nur die drei mit 7a, 7g und 7d bezeichneten sichtbar sind) aufgehängt. Sämtliche Rüttelzylinder sind durch ein Rüttelgestell 7 miteinander verbunden und können über eine hydraulisch oder pneumatisch betätigbare Zylinderanordnung 9 für Ausbau- beziehungsweise Revisions zwecke abgesenkt oder angehoben werden.

Die aus einem luftdurchlässigen Gewebe bestehenden Filtergarnituren 3a-3g münden mit ihren unteren Endabschnitten in die entsprechenden Oeffnungen 5a-5g des Filterbodens 4. Innerhalb jeder Oeffnung 5a-5g ist, wie Fig. 1 zeigt, ein Staub-Auffangtopf 8a-8g angeordnet. Der Aussendurchmesser der Auffangtöpfe 8a-8g ist so bemessen, dass zwischen denselben und der benachbarten Wandung der Filterbodenöffnung 5a-5g ein Ringspalt R verlässt, wobei der mitgeführte Staub an den Innenflächen der Filtergarnituren zurückgehalten wird.

Im Hinblick auf die periodisch erforderliche Reinigung der Filtergarnituren 3a-3g ist im Filterboden 4, im Umfangsbereich jedes Auffangtopfes 8a-8g, eine aufblasbare Ringdichtung 11a-11g angeordnet, von welchen in Fig. 1 allerdings nur die gerade im Betrieb befindliche und mit 11d bezeichnete, sichtbar ist. Dank dieser in der Reinigungsphase der Filtergarnitur 3d aufgeblasenen Ringdichtung 11d wird nun der Ringspalt R im Bereich des Auffangtopfes 8d luftdicht verschlossen, sodass die vom Wirbelbett aufsteigende Abluft die Filtergarnitur 3d nicht durchströmen kann. Durch Betätigung des dieser Filtergarnitur 3d zugeordneten Rüttelzylinders 7d wird nun der an der Innenfläche der Filtergarnitur 3d hängende Staub abgeschüttelt und fällt in Pfeilrichtung nach unten in den Auffangtopf 8d. Durch entsprechende Programmierung des Verfahrensablaufs kann somit eine Filtergarnitur nach der anderen ohne Prozessunterbrechung und ohne störende Verminderung des Gesamt-Luftdurchsatzes gereinigt werden.

Die anhand der Fig. 1 und 2 beschriebene Einrichtung eignet sich daher für sämtliche Behandlungsverfahren, welche eine gesamthafte Ausscheidung des Abluftstaubes aus dem Behandlungsprozess verlangen.

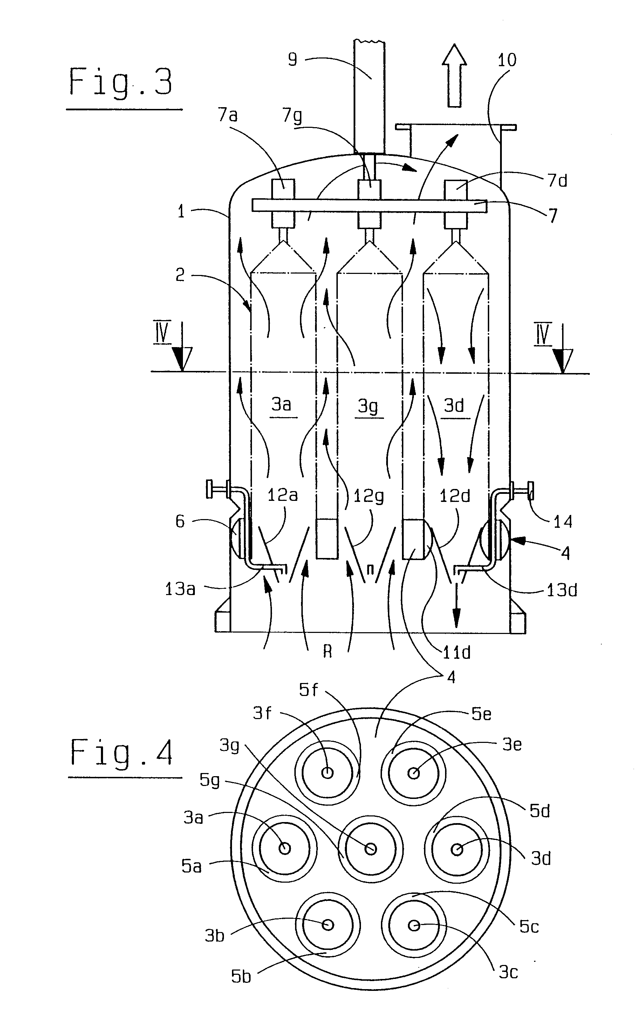

Die in Fig. 3 und 4 dargestellte Einrichtung ist dagegen für alle diejenigen Fälle vorgesehen, in welchen der Abluftstaub gesamthaft direkt dem Wirbelbett wieder zugeführt werden muss. Die in Fig. 1 und 2 bereits eingeführten Bezugszahlen, welche unveränderte Anlageteile bezeichnen, wurden in Fig. 3 und 4 beibehalten.

Im Unterschied zu der bereits beschriebenen Einrichtung zeigt Fig. 3 in den Oeffnungen 5a-5g des Filterbodens 4 je einen Auffangtrichter 12a-12g, welcher ebenfalls lösbar im Filterboden 4 befestigt ist und in seiner Einbaulage einen Ringspalt R für die aufwärts strömende Prozessluft frei lässt. Wie in Fig. 1 ist dieser Ringspalt R im Bereich der Filtergarnitur 3d, welche sich in ihrer Reinigungsphase befindet, durch die Ringdichtung 11d geschlossen.

In jeden Auffangtrichter 12a-12g ragt eine Blasdüse 13a-13g, welche jeweils über eine Druckluftleitung 14 an eine nicht gezeigte Druckluftquelle angeschlossen ist. Die Blasdüsen 13a-13g sind zentral, das heisst in der vertikalen Mittelachse des jeweiligen Auffangtrich ters mit nach unten gerichteter Blasmündung angeordnet und über nicht gezeigte Absperrventile mit der gemeinsamen Druckluftleitung 14 verbunden.

Bei dem gewählten Ausführungsbeispiel, das die Filtergarnitur 3d in ihrer Reinigungsphase zeigt, wird die Blasdüse 13d durch Oeffnen des zugehörigen Absperrventils mit Druckluft beschickt, so dass sie den in den Auffangtrichter 12d herabfallenden Staub mit einer Art Injektorwirkung nach unten weiterbefördert. Dabei wirkt der aus dem Auffangtrichter 12d nach unten austretende, staubbeladene Druckluftstrahl dem aufsteigenden Prozessluftstrom entgegen und drängt denselben zurück, sodass dieser nicht in die Filtergarnitur 3d gelangen kann und dieselbe somit während des Reinigungsvorganges drucklos bleibt.

Die Blasdüsen 13a-13g sind mit deren Zuleitungen im Filterboden 4 befestigt, welcher bei Bedarf gesamthaft ausgebaut und durch einen anderen, beispielsweise den in Fig. 1 dargestellten Filterboden ersetzt werden kann. Auf diese Weise lässt sich die gleiche Anlage für die verschiedensten Behandlungsprozesse einsetzen und bei Bedarf innerhalb kurzer Zeit auf einen neuen Behandlungsprozess umstellen. Eine ausserhalb des Gehäuses 1 befindliche Abluftfiltervorrichtung ist überhaupt nicht mehr erforderlich.

Gemäss einer Ausführungsvariante können aber auch die Auffanggefässe, d.h. die Auffangtöpfe 8a-8g und die Auffangtrichter 12a-12g mit den zugehörigen Blasdüsen 13a-13g leicht auswechselbar angeordnet sein.

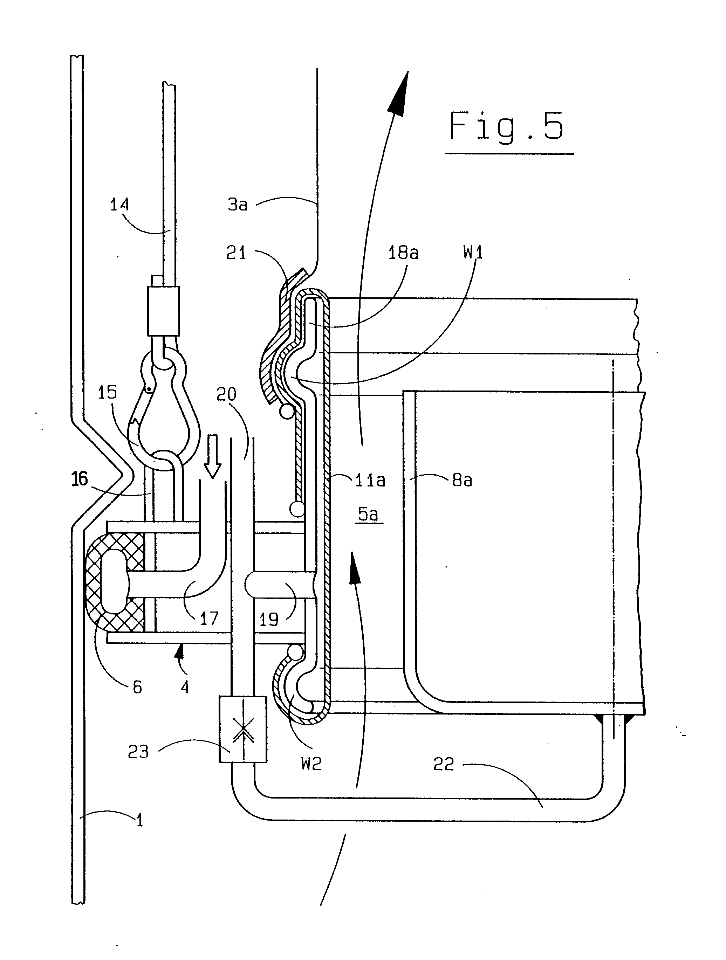

Diese Variante, welcher im Rahmen der vorliegenden Erfindung der Vorzug gegeben wird, ist in den Figuren 5 bis 8 in ihren konstruktiven Einzelheiten dargestellt und wird nachstehend beschrieben.

Fig. 5 zeigt unter Beibehaltung der bereits eingeführten Bezugszahlen den gesamthaft mit 4 bezeichneten Filterboden, welcher mittels mehrerer Tragelemente 14, die beispielsweise als Kette oder Stange ausgebildet sein können, am Rüttelgestell R (Fig. 1 und 3) aufgehängt ist. Die lösbare Verbindung zwischen Tragelement 14 und Filterboden 4 erfolgt mittels bekannter Karabinerhaken 15, die jeweils in am Filterboden 4 befestigte Haltebügel 16 eingreifen. Die Druckluftleitung, welche die Ringdichtung 6 mit Druckluft versorgt, ist mit 17 bezeichnet. Sie ist mit einem nicht dargestellten Absperrventil und einem Entlüftungshahn versehen, die allerdings nur beim Ausbau des gesamten Filterbodens 4 betätigt werden müssen.

Im Filterboden 4 sind ferner die sieben bereits erwähnten Oeffnungen 5a bis 5g vorgesehen, welche von praktisch zylindrischen Wandungen 18a bis 18g umgrenzt werden, wovon allerdings nur die mit 18a bezeichnete sichtbar ist. In einem oberen Ringwulst W1 der Wandung 18a ist die aufblasbare Ringdichtung 11a mit ihrem Oberteil verankert, deren Unterteil durch einen oberen Ringwulst W2 gesichert ist. Die aus elastisch dehnbarem Material bestehende Ringdichtung 11a wird bei der Montage in die dargestellte Lage über die Wandung 18a gezogen und ist damit über die Abzweigung 19 einer Druckluftleitung 20 je nach Bedarf mit Druckluft beschickbar.

Ueber das Oberteil der Ringdichtung 11a legt sich das untere Ende der darüber befindlichen Filtergarnitur 3a, das in dieser Lage durch eine Metallklammer 21 gesichert ist.

Der Auffangtopf 8a ist starr am oberen Ende einer Tragstange 22 befestigt, die sich mittels einer bekannten Steckkupplung 23 auf das untere Ende der Druckluftleitung 20 aufstecken lässt und damit den Auffangtopf 8a in seiner gezeichneten Lage innerhalb der Filterbodenöffnung 5a hält.

In der Betriebslage nach Fig. 5 ist die Ringdichtung 11a drucklos. Der Ringraum zwischen Auffangtopf 8a und Ringdichtung 11a ist somit frei, so dass die Abluft vom Wirbelbett in Richtung der beiden Pfeile nach oben in die Filtergarnitur 3a strömen kann, diese dann von innen nach aussen durchdringt und den mitgeführten Staub dabei an der Innenseite der Filtergarnitur 3a zurücklässt. Das gleiche gilt selbstverständlich auch für die anderen Filtergarnituren mit Ausnahme derjenigen, welche sich gerade in ihrer Reinigungsphase befindet.

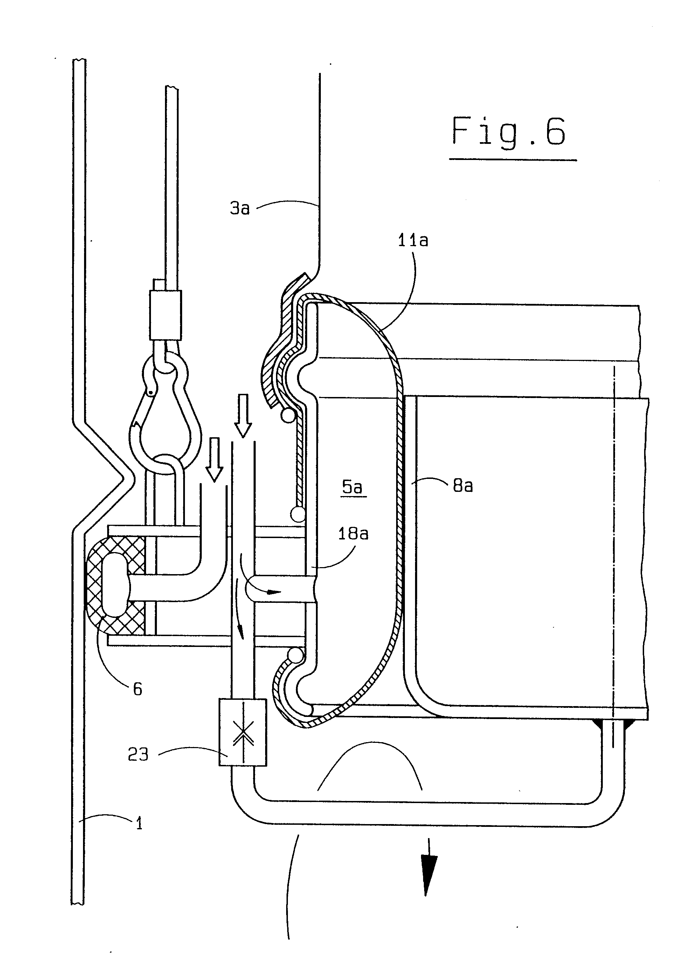

In der Reinigungsphase wird die Ringdichtung 11a mit Druckluft beschickt, so dass sich die in Fig. 6 dargestellte Situation ergibt. Der Ringraum zwischen dem Auffangtopf 8a und der Wandung 18a ist nun durch die Ringdichtung 11a verschlossen, die Abluft wird an dieser Stelle in Pfeilrichtung umgelenkt und strömt durch die übrigen Filterbodenöffnungen 5b-5g nach oben. Der von der Innenfläche der Filtergarnitur 3a abfallende Staub wird im Auffangtopf 8a gesammelt und kann von dort entweder gesamthaft entfernt oder dosiert der Wirbelschichtzone wieder zugeführt werden.

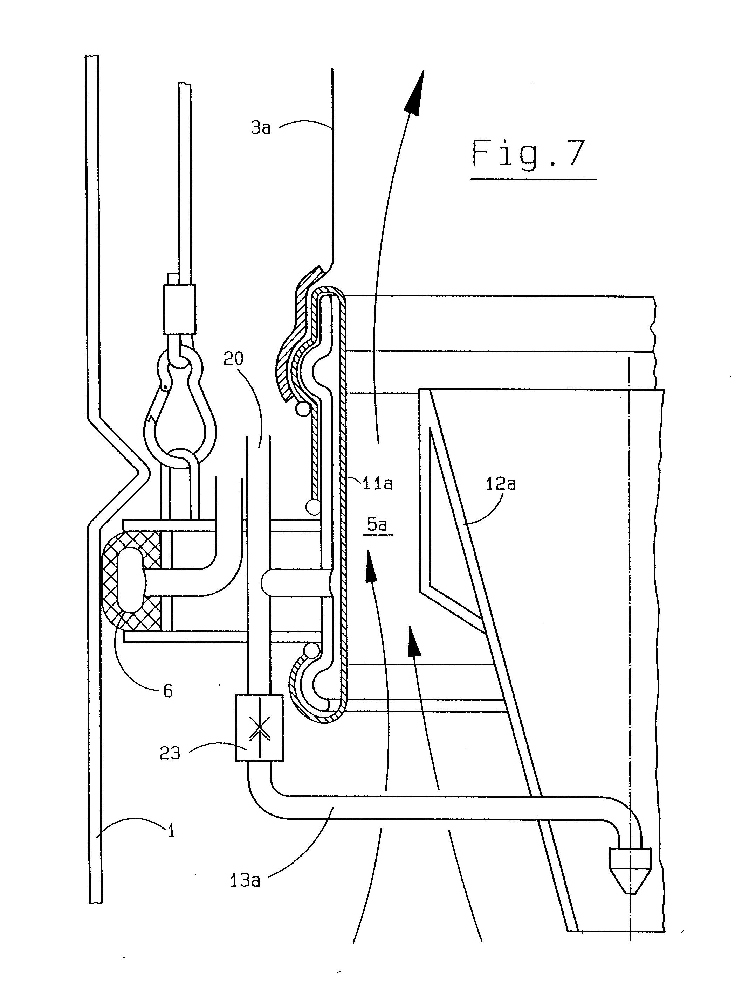

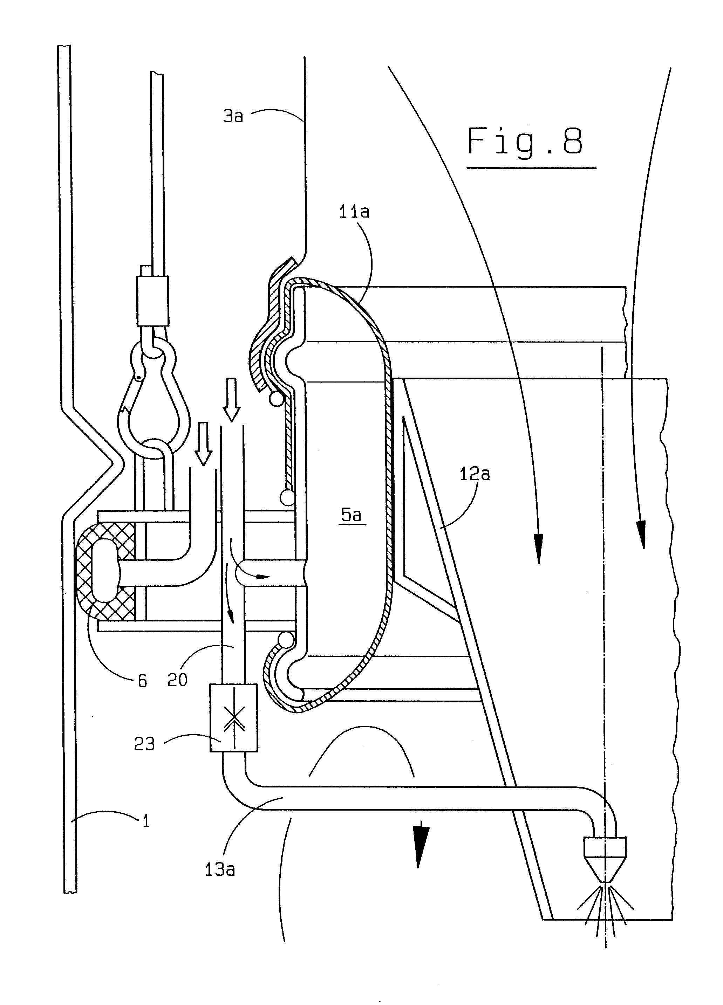

Soll der gesamte, in der Reinigungsphase anfallende Staub direkt in die Wirbelschichtzone zurückbefördert werden, so werden die Auffangtöpfe 8a-8g durch die Auffang trichter 12a-12g ersetzt (Fig. 7 und 8), welche fest mit den zugehörigen Blasdüsen 13a-13g verbunden sind und sich, wie die Auffangtöpfe, mittels der Steckkupplung 23 befestigen lassen. Fig. 7 zeigt wiederum den Betriebszustand, in welchem die Abluft den Ringraum in Pfeilrichtung passiert, während Fig. 8 den direkten Transport des Staubes durch den Auffangtrichter 12a ins Wirbelbett darstellt.

Die Steckkupplung 23 kann beispielsweise von der bekannten Bauart sein, in welcher eine federbelastete Kugel in das zu arretierende Element, hier den Endabschnitt der Tragstange 22 oder der Blasdüse 13a, einrastet. Derartige leicht lösbare Steckkupplungen sind dem Fachmann bekannt und brauchen daher im vorliegenden Zusammenhang nicht beschrieben zu werden.

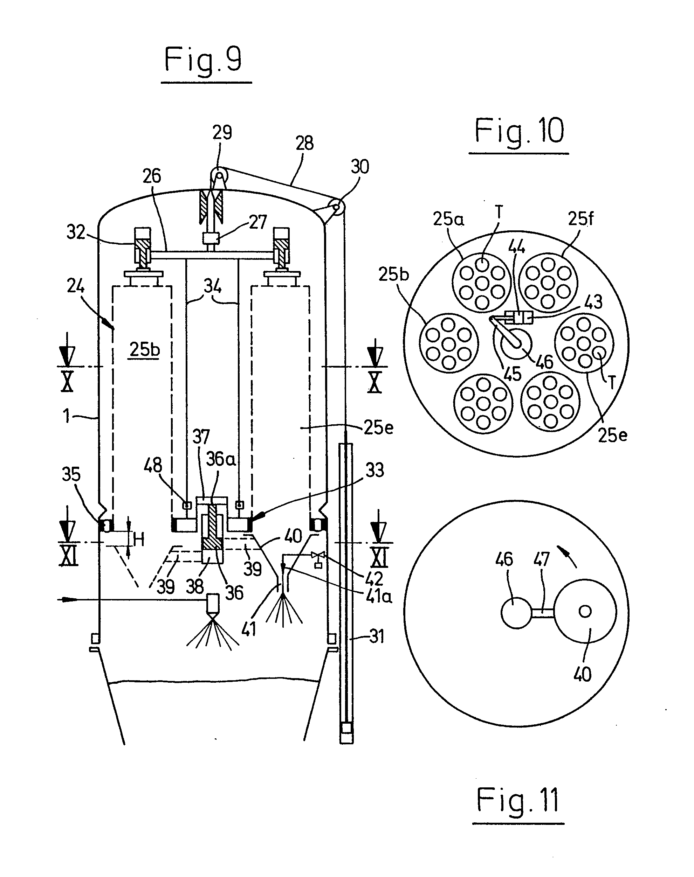

Eine Variante der erfindungsgemässen Einrichtung wird nachstehend unter Bezugnahme auf die Fig. 9 bis 11 der beiliegenden Zeichnung beschrieben.

Gemäss Fig. 9 weist auch diese Variante ein mit 1 bezeichnetes Gehäuseoberteil auf, in welchem ein Abluftfilter 24 untergebracht ist. In diesem Falle besteht der Abluftfilter 24 aus insgesamt sechs Filtergarnituren 25a bis 25f, welche innerhalb des zylindrischen Gehäuseoberteils 1 gemäss Fig. 10 mit einer jeweiligen Versetzung um 60° symmetrisch angeordnet sind. Jede Filtergarnitur 25a bis 25f ist ihrerseits wieder mit einer Reihe von Textileinsätzen T (Fig. 10) versehen, welche jedoch im vorliegenden Zusammenhang nicht von Bedeutung sind und daher auch nicht im einzelnen beschrieben werden sollen.

Der gesamte Abluftfilter ist über ein Filtergestell 26 und eine Schnellkupplung 27 an einem Seil 28 aufge hängt, das über Rollen 29 und 30 an der Aussenfläche des Gehäuseoberteils 1 bis zu einem pneumatischen Druckzylinder 31 geführt ist. Mit dieser Einrichtung lässt sich der gesamte Abluftfilter innerhalb des Gehäuseoberteils 1 aus seiner dargestellten Betriebslage zwecks Ausführung von Revisions- bzw. Reinigungsarbeiten absenken.

Am Gestell 26 sind einerseits die sechs Filtergarnituren 25a bis 25f mittels pneumatischen Druckzylindern 32 aufgehängt, sowie andererseits der insgesamt mit 33 bzeichnete Filterboden, der im Mittelbereich des Gestells 26 an mehreren Drahtseilen 34 hängt.

Der Filterboden 33 ist auch hier wieder mittels eines aufblasbaren Dichtungsringes 35 gegen die Innenfläche der Gehäusewandung abgedichtet und trägt in seinem Mittelteil einen Kolben 36, welcher mit seiner Kolbenstange 36a an einer Ausbuchtung 37 des Filterbodens fest verankert ist. Am Umfang des Kolben 36 ist ein Zylinder 38 gleitend gelagert, so dass sich derselbe in Bezug auf den Kolben 36 vertikal auf- und abbewegen kann. Ausserdem kann sich der Zylinder 38 am Umfang des Kolbens um seine eigene Achse drehen. Am Zylinder 38 ist mittels eines Tragarmes 39 ein Auffanggefäss 40 angeordnet, das trichterförmig ausgebildet ist und eine untere Oeffnung 41 aufweist. Dieses als Staubauffangtrichter dienende Auffanggefäss 40 besitzt eine eingebaute Druckluftdüse 41a, mit dazu gehörigem Absperrventil 42. Während des Arbeitsprozesses befindet sich das Auffanggefäss 40 unterhalb einer der Filtergarnituren 25a bis 25f in einem Abstand H, so dass also die für diesen Behandlungsprozess erforderliche Luft von innen nach aussen alle Filtergarnituren 25a bis 25f durchströmen kann. Nach einer einstellbaren Zeit wird das Auffanggefäss 40 mittels des pneumatischen, doppelt-wirkenden Zylinders 38, der mit nicht dargestell- ten Druckluftanschlüssen versehen ist, hochgeh- oben und am Filterboden 33 angepresst. Demzufolge kann durch die ober halb des Auffanggefässes 40 befindliche Filtergarnitur 25e keine Luft mehr hindurchströmen und diese Filtergarnitur kann nun mit dem ihr zugeordneten pneumatischen Druckzylinder 32 geschüttelt werden. Der Staub gelangt dadurch in das Auffanggefäss 40 und wird durch Oeffnen des Ventils 42 mit Druckluft in die Wirbelschichtzone zurückgeblasen. Nach diesem Filterreinigungsvorgang wird das Auffanggefäss 40 durch Betätigung des Zylinders 38 wieder abgesenkt und mittels einer weiteren Vorrichtung (Fig. 11) gedreht, bis es sich unter der nächstfolgenden Filtergarnitur 25f befindet.

Die zur Weiterdrehung des Auffanggefässes 40 um jeweils 60° erforderliche Vorrichtung ergibt sich schematisch aus Fig. 10. Sie weist einen pneumatischen Druckzylinder 43 auf, dessen Kolben 44 über eine Kurbel 45 einen drehbar gelagerten Zylinder 46 bewegt, welcher seinerseits über einen Arm 47 mit dem Auffanggefäss 40 verbunden ist.

Derartige Drehmechanismen sind von anderen Anwendungsgebieten her bekannt, so dass auf eine detaillierte Beschreibung verzichtet werden kann. Auch lässt sich die schematisch dargestellte Vorrichtung vom Fachmann in vielfacher Hinsicht innerhalb des Erfindungsgedankens abwandeln.

Nachdem das Auffanggefäss 40 unter die nächstfolgende Filtergarnitur 25f gebracht wurde, wiederholt sich der Abschüttelvorgang in einstellbaren Zeitabständen während des ganzen Arbeitsprozesses. Da während des Rüttelvorganges lediglich ein Sechstel der Filterfläche unaktiv bleibt, wird die Betriebsluftmenge nur unwesentlich beeinflusst, und das Wirbelbett bleibt während des ganzen Arbeitsprozesses auch bei klebrigen Produkten erhalten.

Bei Produktwechsel kann der gesamte Filter 24 ab gesenkt und der Filterboden 33 durch Betätigung von Schnellkupplungen 48 bequem aus dem Appa- rat herausgenommen werden. Anschliessend kön- nen die Filtergarnituren 25a bis 25f abgesenkt und durch Betätigung der ihnen zugeordneten Schnellkupplungen 32 aus dem Apparat entfernt werden.

Gegenüber der anhand der Fig. 1 bis 8 beschriebenen Ausführungsform zeigen die Fig. 9 bis 11 somit eine Variante, welche sich durch den Vorteil auszeichnet, dass lediglich ein einziges Auffanggefäss 40 für die Reinigung sämtlicher sechs Filtergarnituren 25a bis 25f erforderlich ist. Im Gegensatz zur Ausführungsform nach den Fig. 1 bis 8, welche zwar lösbare, aber doch ortsfest verankerte Auffanggefässe zeigen, ist das Auffanggefäss 40 gemäss Fig. 9 bis 11 sowohl vertikal verschiebbar als auch in Umfangsrichtung jeweils um 60° intermittierend beweglich gelagert.

**Patentansprüche**

1. Einrichtung zur Behandlung wirbelfähiger Substanzen im Wirbelschichtverfahren, mit einem Gehäuse (1), in dessen Unterteil eine zur Aufnahme des Wirbelbettes dienende Wirbelkammer und, oberhalb derselben, ein Abluftfilter (2) angeordnet ist, welches zwecks Abscheidung des in der Abluft enthaltenen Stau- bes eine Reihe schlauchförmiger, luftdurchläs- siger Filtergarnituren (3a-3g) enthält, die an ihrem Oberteil an je einer Rüttelvorrichtung (7a-7g) aufgehängt sind und an ihren unteren Enden in einen die Oeffnungen der schlauchför- migen Filtergarnituren freilassenden Filterbo-

den (4) münden, wobei die Rüttelvorrichtung so gesteuert ist, dass die Filtergarnituren (3a-3g) periodisch abwechselnd zwecks Ablösung des an der Innenfläche derselben haftenden Staubes kurzzeitig gerüttelt werden, um den sich lösenden Staub je nach Bedarf entweder ganz oder teilweise aus dem Behandlungsprozess auszuscheiden oder direkt ins Wirbelbett zurückzuführen, dadurch gekennzeichnet, dass im Bereich mindestens einer Oeffnung (5a-5g) (Fig. 10) des Filterbodens ein Auffanggefäss (8a-8g; 12a-12g; 40) angeordnet ist, das in der betreffenden Filterbodenöffnung während der Betriebsphase der darüber hängenden Filtergarnitur (25 ) einen peripheren Ringspalt (R) für die staubbeladene Abluft freilässt, und dass dieser Ringspalt (R) während der Reinigungsphase der betreffenden Filtergarnitur (25e) luftdicht verschliessbar ist.

2. Einrichtung nach Anspruch 1, dadurch gekennzeichnet, dass innerhalb jeder Filterbodenöffnung (5a-5g) ein Auffanggefäss (8a-8g; 12a-12g) lösbar aber ortsfest montiert ist und dass der genannte Ringspalt (R) in der Reinigungsphase der Filtergarnitur durch ein von aussen betätigbares Abdichtelement (11a-11g) luftdicht verschliessbar ist.

3. Einrichtung nach Anspruch 2, dadurch gekennzeichnet, dass das Auffanggefäss ein mit einem luftdichten Boden versehener Auffangtopf (8a-8g) ist.

4. Einrichtung nach Anspruch 2, dadurch gekennzeichnet, dass das Auffanggefäss ein sich nach unten verengender Trichter (12a-12g) ist, durch welchen der herabfallende Staub in das darunter befindliche Wirbelbett gelangt, wobei in der Achse des Trichters (12a-12g) eine mit Druckgas beschickbare Förderdüse (13a-13g) angeordnet ist, um einerseits die nach oben drängende Abluft im Bereich der in der Reinigungsphase befindlichen Filtergarnitur (3d) zurückzudrängen und andererseits den herabfallenden Staub nach unten ins Wirbelbett weiterzubefördern.

5. Einrichtung nach einem der Ansprüche 2 bis 4, dadurch gekennzeichnet, dass das jeder Filtergarnitur (3a-3g) zugeordnete Abdichtelement eine aufblasbare Ringdichtung (11a-11g) ist, welche im aufgeblasenen Zustand den Ringspalt (R) zwischen Auffanggefäss (8a-8g/ 12a-12g) und Filterbodenöffnung (5a-5g) luftdicht verschliesst.

6. Einrichtung nach einem der Ansprüche 2 bis 5, dadurch gekennzeichnet, dass das Auffanggefäss (8a-8g/12a-12g) am Filterboden (4) aufgehängt und damit je nach Bedarf der Auffangtopf (8a-8g) innerhalb kürzester Frist durch den Trichter (12a-12g), oder umgekehrt, ersetzbar ist.

7. Einrichtung nach Anspruch 3, dadurch gekennzeichnet, dass der Auffangtopf (8a-8g) durch eine Tragstange (22) gehalten ist, welche an der zur Beschickung der Blasdüse (13a-13g) dienenden Druckluftleitung (20) lösbar befestigt ist.

8. Einrichtung nach Anspruch 4, dadurch gekennzeichnet, dass der Auffangtrichter (12a-12g) mit der zugehörigen Blasdüse (13a-13g) fest verbunden und die Blasdüse mit Mitteln zur lösbaren Befestigung derselben an der zugehörigen Druckluftleitung (20) versehen ist.

9. Einrichtung nach einem der Ansprüche 2 bis 8, dadurch gekenzeichnet, dass der Filterboden (4) für jedes Auffanggefäss (8a-8g bzw. 12-12g) eine beidseits offene zylindrische Hülse (18a-18g) aufweist, deren Innendurchmesser grösser als der Aussendurchmesser des Auffanggefässes ist, so dass zwischen der Hülse (18a-18g) und dem Auffanggefäss (8a-8g bzw. 12a-12g) ein freier Ringraum besteht.

10. Einrichtung nach einem der Ansprüche 2 bis 9, dadurch gekennzeichnet, dass der Filterboden (4), in dem die unteren Enden der Filtergarnituren (3a-3g) lösbar befestigt sind, gesamthaft lösbar im Gehäuse (1) angeordnet ist.

11. Einrichtung nach Anspruch 10, dadurch gekennzeichnet, dass am Aussenumfang des Filterbodens (4) oder am benachbarten Innenumfang des Gehäuses (1) eine aufblasbare Ringdichtung (6) angeordnet ist, welche den Filterboden (4) bezüglich des Gehäuses (1) gleichzeitig in seiner Lage leicht lösbar sichert und abdichtet.

12. Einrichtung nach Anspruch 1, dadurch gekennzeichnet, dass unterhalb des Filterbodens lediglich ein einziges Auffanggefäss (40) angeordnet ist, das sich in Umfangsrichtung von einer Filterbodenöffnung zur benachbarten Filterbodenöffnung verschieben und in der Reinigungsphase unter luftdichtem Abschluss der genannten Ringspaltes (R) gegen eine am Filterboden (33) befindliche Dichtung anpressen lässt.

13. Einrichtung nach Anspruch 12, dadurch gekennzeichnet, dass das Auffanggefäss (40) an einem durch ein Druckmedium betätigbaren, vertikalbeweglich gelagerten Druckzylinder (38) befestigt ist.

14. Einrichtung nach Anspruch 13, dadurch gekennzeichnet, dass der Druckzylinder (38) um seine eigene Achse drehbar gelagert ist und das Auffanggefäss (40) ferner mit einem durch ein Druckmedium beaufschlagbaren Kolben (44) verbunden ist, der es gestattet, das Auffanggefäss (40) in Umfangsrichtung unter die Filterbodenöffnung der zu reinigenden Filtergarnitur zu bewegen.

15. Einrichtung nach einem der Ansprüche 12 bis 14, dadurch gekennzeichnet, dass das Auffanggefäss (40) ein mit einem luftdichten Boden versehener Auffangtopf ist.

16. Einrichtung nach einem der Ansprüche 12 bis 14, dadurch gekennzeichnet, dass das Auffanggefäss ein sich nach unten verengender Trichter ist, durch welchen der herabfallende Staub in das darunter befindliche Wirbelbett gelangt, wobei in der Achse des Trichters eine mit Druckgas beschickbare Förderdüse (41) angeordnet ist, um einerseits die nach oben drängende Abluft im Bereich der in der Reinigungsphase befindlichen Filtergarnitur (25e) zurückzudrängen und andererseits den herabfallenden Staub nach unten ins Wirbelbett weiterzubefördern.

Fig.1

Fig.2

0295213

## Fig.3

## Fig.4

0295213

Fig.5

0295213

Fig.6

0295213

Fig.7

Fig.8

0295213

# Fig.9

# Fig.10

# Fig.11

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A- 863 888 (SIMON HANDLING ENGINEERS) <br> * Seite 1, Zeilen 9-19,43-79; Figur 1 * <br> --- | 1 | B 01 D 46/04 |
| A | FR-A-1 184 609 (METALS DESINTEGRATING) <br> * Seite 1, Spalte 1, Zeilen 1-9; Seite 9, Spalte 2, Zeilen 6-45; Figur 13 * <br> --- | 1,2 | |
| A | DE-A-2 654 519 (AEROMATIC) <br> * Figuren 1,2 * <br> --- | 1 | |
| A | US-A-3 400 580 (R.J. HAREN et al.) <br> * Zusammenfassung; Spalte 2, Zeilen 47-55; Figur 1 * <br> --- | 5 | |
| A | US-A-4 430 231 (J. BRATTEN) <br> * Zusammenfassung; Spalte 5, Zeilen 23-34; Figur 1 * <br> ----- | 5 | |

RECHERCHIERTE SACHGEBIETE (Int. Cl.4)

B 01 D
B 01 J

Der vorliegende Recherchenbericht wurde für alle Patentansprüche erstellt

| Recherchenort | Abschlußdatum der Recherche | Prüfer |
|---|---|---|
| DEN HAAG | 14-09-1988 | SIEM T.D. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)